# EUROPÄISCHE PATENTSCHRIFT

(11) **EP 1 473 946 B1**
(45) Veröffentlichungstag und Bekanntmachung des Hinweises auf die Patenterteilung: **20.12.2006**
(21) Anmeldenummer: 04007839.6
(22) Anmeldetag: 31.03.2004
(51) Int. Cl.: H04Q 1/28, H04M 11/06

(54) **Kommunikationszentrale**
communication center
Centre de communication

(30) Priorität: 30.04.2003 DE 10319816
(43) Veröffentlichungstag der Anmeldung: 03.11.2004
(73) Patentinhaber: Pandacom Networking AG, 63303 Dreieich (DE)
(72) Erfinder: Götz, Frank, 55606 Kirn (DE); Radnic, Goran, 62859 Eppertshausen (DE)
(74) Vertreter: Kewitz, Ansgar

(56) Entgegenhaltungen:
- EP-A- 0 176 953
- EP-A- 1 198 144
- US-A1- 2002 072 345
- KOPNIWSKY H ET AL: "MODULAR TELECOM POWER WITH INTERNAL OPTICAL COMMUNICATION" ON - ERICSSON REVIEW, ERICSSON. STOCKHOLM, SE, Bd. 73, Nr. 3, 1996, Seiten 113-123, XP000629581 ISSN: 0014-0171

## Beschreibung

Die Erfindung betrifft eine Kommunikationszentrale zur Vermittlung von Daten- und/oder Sprachdiensten.

Es sind fest installierte Kommunikationszentralen bekannt, die dazu dienen, an dem Installationsort eine Kommunikationsinfrastruktur zur Vermittlung von Daten- und/oder Sprachdiensten bereitzustellen. Mit der Kommunikationszentrale sind in der Regel Datenverarbeitungsendgeräte, beispielsweise PCs und/oder Telekommunikationsendgeräte, beispielsweise Telefongeräte, Faxgeräte oder dergleichen verbunden.

Der Aufbau einer solchen Kommunikationszentrale ist mit einem hohen organisatorischen Aufwand und hohem Kostenaufwand verbunden, so daß es in der Regel nicht wirtschaftlich ist, eine solche Kommunikationszentrale an einem Ort zu errichten, an dem sie nur vorübergehend benötigt wird.

Durch EP-A-1 198 144 ist eine Kommunikationszentrale der betreffenden Art zur Vermittlung von Sprach- und/oder Datendiensten bekannt, die aus getrennt voneinander transportablen Modulen besteht und wenigstens ein zentrales Modul, das wenigstens eine Stromversorgungseinheit, eine Datenverarbeitungseinheit und eine Schnittstelleneinheit aufweist, und wenigstens ein dezentrales Modul zum Anschließen von Endgeräten aufweist. Hierbei sind das zentrale Modul und das wenigstens eine dezentrale Modul in separaten Gehäusen aufgenommen und durch Datenübertragungsmittel in Datenübertragungsverbindung miteinander bringbar.

Der Erfindung liegt die Aufgabe zugrunde, eine Kommunikationszentrale anzugeben, die es ermöglicht, in einfacher, schneller und flexibler Weise auch an wechselnden Orten eine Kommunikationsinfrastruktur bereitzustellen.

Diese Aufgabe wird durch die im Anspruch 1 angegebene Lehre gelöst.

Der Grundgedanke der erfindungsgemäßen Lehre besteht darin, die Kommunikationszentrale aus separaten, getrennt voneinander transportablen Modulen zu bilden. Diese Module weisen wenigstens ein zentrales Modul, das eine Stromversorgungseinheit, eine Datenverarbeitungseinheit und eine Schnittstelleneinheit aufweist, und wenigstens ein dezentrales Modul auf, an das Endgeräte anschließbar sind. Zum Aufbau einer Kommunikationszentrale an einem gewünschten Ort werden die Module zunächst an diesen Ort transportiert und vor Ort in Datenübertragungsverbindung miteinander gebracht. Dies ermöglicht auf schnelle, einfache und flexible Weise die Einrichtung einer Kommunikationszentrale auch an wechselnden Orten. Aufgrund des modularen Aufbaus ist die erfindungsgemäße Kommunikationszentrale besonders vielfältig einsetzbar und erweiterbar. So ist es beispielsweise möglich, dem zentralen Modul und dem wenigstens einen dezentralen Modul eine nahezu beliebige Anzahl weiterer dezentraler Module hinzuzufügen, wenn beispielsweise eine hohe Anzahl von Endgeräten erforderlich ist.

Erfindungsgemäß sind die Stromversorgungseinheit, die Datenverarbeitungseinheit und die Schnittstelleneinheit jeweils als getrennt voneinander transportable Module ausgebildet. Somit bilden die Stromversorgungseinheit, die Datenverarbeitungseinheit und die Schnittstelleneinheit Untermodule des zentralen Moduls. Erfindungs gemäß sind ferner die Stromversorgungseinheit, die Datenverarbeitungseinheit und die Schnittstelleneinheit jeweils in einem separaten Gehäuse aufgenommen. Auf dieses Weise können diese Einheiten unabhängig voneinander transportiert werden, wobei die Einheiten während des Transports durch ihr jeweiliges Gehäuse sicher vor Beschädigung geschützt sind. Auf diese Weise ist die Flexibiliät der erfindungsgemäßen Kommunikationszentrale noch weiter erhöht.

Bei der vorgenannten Ausführungsform können zweckmäßigerweise Verbindungsmittel zur Verbindung der Gehäuse der Stromversorgungseinheit, der Datenverarbeitungseinheit und der Schnittstelleneinheit miteinander vorgesehen sein, wie dies eine Weiterbildung vorsieht. Auf diese Weise ist es möglich, die Stromversorgungseinheit, die Datenverarbeitungseinheit und die Schnittstelleneinheit getrennt voneinander zu transportieren, an Ort und Stelle jedoch zu einer das zentrale Modul bildenden stabilen Einheit zu verbinden.

Eine außerordentlich vorteilhafte Weiterbildung der erfindungsgemäßen Lehre sieht vor, daß die Gehäuse feuchtigkeits- und/oder staubdicht ausgebildet sind. Auf diese Weise ist es möglich, die erfindungsgemäße Kommunikationszentrale auch unter ungünstigen Umwelt- oder Witterungsbedingungen einzusetzen, beispielsweise an staubigen oder feuchten Einsatzorten.

Eine andere außerordentlich vorteilhafte Weiterbildung der erfindungsgemäßen Lehre sieht vor, daß den Gehäusen jeweils eine Klimatisierungs- und/oder Heizeinrichtung zur Klimatisierung und/oder Beheizung des jeweiligen Gehäuseinneren zugeordnet ist. Bei dieser Ausführungsform sind die Einsatzmöglichkeiten der erfindungsgemäßen Kommunikationszentrale wesentlich erweitert, da die Kommunikationszentrale auch unter ungünstigen klimatischen Bedingungen eingesetzt werden kann, beispielsweisweise bei großer Kälte, großer Wärme oder hoher Luftfeuchtigkeit. Die Klimatisierungs- und/oder Heizeinrichtung sorgt entsprechend den jeweiligen Anforderungen dafür, daß die für die in dem jeweiligen Gehäuse aufgenommenen elektrischen und elektronischen Bauteile erforderlichen Arbeitsbedingungen eingehalten werden.

Grundsätzlich können die Datenverarbeitungseinheit und die Schnittstelleneinheit eine eigene Stromversorgungseinrichtung aufweisen. Um die erfindungsgemäße Kommunikationszentrale zu vereinfachen und damit kostengünstiger zu gestalten, sieht eine vorteilhafte Weiterbildung vor, daß die Stromversorgungseinheit einen Anschluß an ein externes Stromnetz aufweist und eine Stromversorgung der Datenverarbeitungseinheit und der Schnittstelleneinheit bildet. Bei dieser Ausführungsform werden die Einheiten des zentralen Moduls durch die Stromversorgungseinheit mit Strom versorgt, so daß sich separate Stromversorgungseinrichtungen erübrigen. Grundsätzlich ist es ausreichend, wenn das zentrale Modul eine einzige Stromversorgungseinheit aufweist. Aufgrund des modularen Aufbaus der erfindungsgemäßen Kommunikationszentrale ist es jedoch auch ohne weiteres möglich, mehr als eine Stromversorgungseinheit vorzusehen.

Um einen Betrieb des zentralen Moduls der erfindungsgemäßen Kommunikationszentrale auch bei einem Ausfall eines externen Stromnetzes zu ermöglichen, ist es zweckmäßig, daß die Stromversorgungseinheit eine unterbrechungsfreie Stromversorgung (USV) aufweist.

Eine andere zweckmäßige Weiterbildung der erfindungsgemäßen Lehre sieht vor, daß das dezentrale Modul eine Stromversorgungseinrichtung aufweist.

Um auch bei einem Ausfall eines externen Stromnetzes einen Betrieb des dezentralen Moduls zu ermöglichen, sieht eine vorteilhafte Weiterbildung der erfindungsgemäßen Lehre vor, daß das dezentrale Modul eine unterbrechungsfreie Stromversorgung (USV) aufweist.

Eine andere Weiterbildung der erfindungsgemäßen Lehre sieht vor, daß die Schnittstelleneinheit wenigstens eine Schnittstelle zum Verbinden der Konimunikationszentrale mit einem Kommunikationsnetz und wenigstens eine Schnittstelle zum Anschluß wenigstens eines dezentralen Modules aufweist.

Grundsätzlich ist es ausreichend, wenn die Schnittstelleneinheit ausschließlich passive Netzwerkkomponenten beinhaltet. Zweckmäßigerweise weist die Schnittstelleneinheit jedoch wenigstens eine aktive Netzwerkkomponente, insbesondere einen Router, auf. Bei dieser Ausführungsform übernimmt die aktive Netzwerkkomponente Schalt- und/oder Verstärkungsfunktionen.

Das dezentrale Modul weist zweckmäßigerweise eine Mehrzahl von Schnittstellen zum Anschluß von Endgeräten, insbesondere Telekommunikations- und/oder Datenverarbeitungsendgeräten, auf.

Entsprechend den jeweiligen Anforderungen können die Module der Kommunikationszentrale miteinander und/oder mit einem Kommunikationsnetz leitungsgebunden, insbesondere über Lichtwellenleiter oder leitungsungebunden, insbesondere über Funk, verbindbar sein.

Um die Betriebssicherheit der erfindungsgemäßen Kommunikationszentrale zu erhöhen, ist es zweckmäßig, daß Datenübertragungsverbindungen zwischen den Modulen der Kommunikationszentrale untereinander und/oder zwischen der Kommunikationszentrale und einem Kommunikationsnetz redundant ausgebildet sind.

Grundsätzlich ist es ausreichend, wenn das wenigstens eine dezentrale Modul ausschließlich passive Netzwerkkomponenten enthält. Das wenigstens eine dezentrale Modul kann jedoch auch wenigstens eine aktive Netzwerkkomponente, beispielsweise einen Switch, aufweisen, wie dies eine Weiterbildung der erfindungsgemäßen Lehre vorsieht.

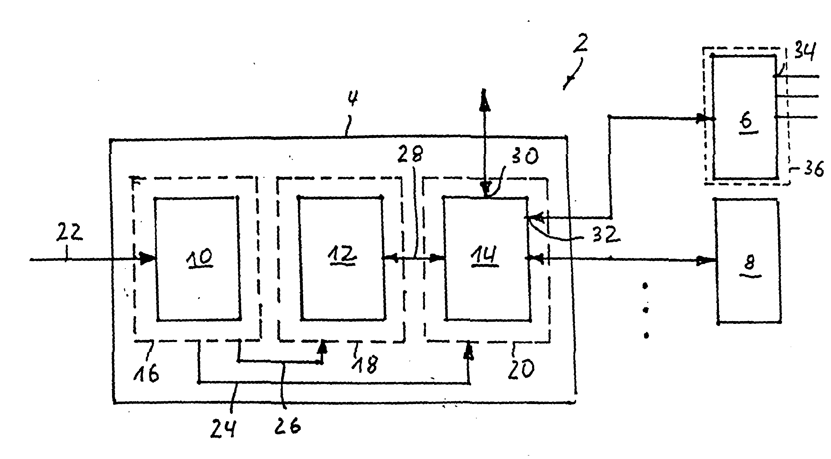

Die Erfindung wird nachfolgend anhand der beigefügten Zeichnung näher erläutert, deren einzige Figur ein stark schematisiertes Blockschaltbild eines Ausführungsbeispieles einer erfindungsgemäßen Kommunikationszentrale darstellt.

In der Zeichnung ist ein Ausführungsbeispiel einer erfindungsgemäßen mobilen Kommunikationszentrale zur Vermittlung von Sprach- und/oder Datendiensten dargestellt, die aus getrennt voneinander transportablen Modulen besteht und bei diesem Ausführungsbeispiel ein zentrales Modul 4 und zwei dezentrale Module 6, 8 aufweist.

Das zentrale Modul 4 weist eine Stromversorgungseinheit 10, eine Datenverarbeitungseinheit 12 und eine Schnittstelleneinheit 14 auf, die bei diesem Ausführungsbeispiel jeweils als getrennt voneinander transportable Module ausgebildet und jeweils in einem separaten Gehäuse 16 bzw. 18 bzw. 20 aufgenommen sind.

Die Stromversorgungseinheit 10 weist einen Anschluß 22 an ein externes Stromnetz auf und bildet eine Stromversorgung der Datenverarbeitungseinheit 12 und der Schnittstelleneinheit 14. Um bei einem Ausfall des externen Stromnetzes den Weiterbetrieb des zentralen Modules 4 sicherzustellen, weist die Stromversorgungseinheit 10 ferner eine unterbrechungsfreie Stromversorgungseinheit (USV) auf. Die Stromversorgungseinheit 10 ist über Stromversorgungsleitungen 24, 26 mit der Schnittstelleneinheit 14 bzw. der Datenverarbeitungseinheit 12 verbunden.

Die Datenverarbeitungseinheit 12 weist bei diesem Ausführungsbeispiel redundant ausgebildete Server sowie entsprechend den jeweiligen Anforderungen alle erforderlichen Datenverarbeitungs- und Massenspeichereinrichtungen auf.

Die Schnittstelleneinheit 14 steht über eine bei diesem Ausführungsbeispiel als Glasfaserkabel ausgebildete Datenübertragungsleitung mit der Datenverarbeitungseinheit 12 in Datenübertragungsverbindung und weist eine Schnittstelle 30 zum Verbinden der Kommunikationszentrale 2 mit einem in der Zeichnung nicht näher dargestellten Kommunikationsnetz und eine Schnittstelle 32 zum Anschließen des dezentralen Modules 6 an das zentrale Modul 4 auf. Bei diesem Ausführungsbeispiel weist die Schnittstelleneinheit 14 eine aktive Netzwerkkomponente in Form eines Routers auf.

Das dezentrale Modul 6 weist eine Mehrzahl von Schnittstellen zum Anschluß von in der Zeichnung nicht dargestellten Endgeräten, insbesondere Telekommunikations- und/oder Datenverarbeitungsendgeräten auf, wobei in der Zeichnung lediglich eine Schnittstelle mit dem Bezugszeichen 34 versehen ist. Das dezentrale Modul 6 ist ferner in einem separaten Gehäuse 34 aufgenommen. Der Aufbau des dezentralen Modules 8 entspricht dem Aufbau des dezentralen Modules 6 und wird daher hier nicht näher erläutert. Falls entsprechend den jeweiligen Anforderungen erforderlich, können zusätzlich zu den dezentralen Modulen 6, 8 in der Zeichnung nicht dargestellte weitere dezentrale Module hinzugefügt werden. Das dezentrale Modul 6 steht über eine bei diesem Ausführungsbeispiel als Glasfaser ausgebildete Datenübertragungsleitung mit der Schnittstelleneinheit 14 des zentralen Modules 4 in Datenübertragungsverbindung. In der Zeichnung ist nicht dargestellt und deshalb wird hier erläutert, daß das dezentrale Modul 6 eine Stromversorgungseinrichtung mit einem Anschluß an ein externes Stromnetz sowie eine unterbrechungsfreie Stromversorgung (USV) aufweist.

Die Gehäuse 16, 18, 20, 36 sind bei diesem Ausführungsbeispiel jeweils feuchtigkeits- und staubdicht ausgebildet, wobei den Gehäusen 16, 18, 20, 36 jeweils eine Klimatisierungs- und Heizeinrichtung zur Klimatisierung bzw. Beheizung des jeweiligen Gehäuseinneren zugeordnet ist. Auf diese Weise ist ein Betrieb der erfindungsgemäßen Kommunikationszentrale 2 auch unter ungünstigen Umwelt- bzw. Witterungsbedingungen möglich.

Die Funktionsweise der erfindungsgemäßen Kommunikationszentrale 2 ist wie folgt:
Zum Aufbau der Kommunikationszentrale 2 werden zunächst die Untermodule des zentralen Modules 4 bildende Stromversorgungseinheit 10, Datenverarbeitungseinheit 12 und Schnittstelleneinheit 14 zusammen mit den dezentralen Modulen 6, 8, an den gewünschten Ort transportiert, wobei die Module während des Transportes durch ihr jeweiliges Gehäuse sicher vor einer Beschädigung geschützt sind. Am gewünschten Einsatzort werden die Stromversorgungseinheit 10, die Datenverarbeitungseinheit 12 und die Schnittstelleneinheit 14 aufgestellt und die Stromversorgungseinheit 10 mit einem externen Stromnetz verbunden. Daran anschließend wird ausgehend von der Stromversorgungseinheit 10 über die Leitungen 24, 26 eine Stromversorgung der Schnittstelleneinheit 14 und der Datenverarbeitungseinheit 12 hergestellt. Daran anschließend wird über die Datenübertragungsleitung 28 eine Datenübertragungsverbindung zwischen der Schnittstelleneinheit 14 und der Datenverarbeitungseinheit 12 und über die Schnittstelle 30 eine Verbindung zu dem in der Zeichnung nicht näher dargestellten Kommunikationsnetz, beispielsweise einem Telefon- und/oder Datennetz oder einer Funkstrecke, hergestellt. Daran anschließend wird das dezentrale Modul 6 über die Schnittstelle 32 in Datenübertragungsverbindung mit der Schnittstelleneinheit 14 gebracht und die gewünschten Endgeräte, beispielsweise Telekommunikations- und/oder Datenverarbeitungsendgeräte, über die Schnittstelle des dezentralen Modules 6 an dieses angeschlossen.

Bei Betrieb der Kommunikationszentrale 2 bildet die Schnittstelleneinheit 14 eine zentrale Vermittlungsstelle für Daten- und/oder Sprachdienste, während die Datenverarbeitungseinheit 12 die anfallenden Datenverarbeitungsfunktionen ausführt.

Aufgrund des modularen Aufbaus kann die erfindungsgemäße Kommunikationszentrale 2 in schneller, einfacher und flexibler Weise an nahezu beliebigen Orten installiert bzw. nach Benutzung wieder deinstalliert werden. Der modulare Aufbau ermöglicht es ferner, die Kommunikationszentrale 2 entsprechend den jeweiligen Anforderungen zu erweitern, beispielsweise durch Hinzufügen zusätzlicher Stromversorgungseinheiten, zusätzlicher Datenverarbeitungseinheiten, zusätzlicher Schnittstelleneinheiten oder zusätzlicher dezentraler Module.

## Patentansprüche

1. Kommunikationszentrale zur Vermittlung von Sprach- und/oder Datendiensten,
die aus getrennt voneinander transportablen Modulen besteht und
- wenigstens ein zentrales Modul (4), das wenigstens eine Stromversorgungseinheit (10), eine Datenverarbeitungseinheit (12) und eine Schnittstelleneinheit (14) aufweist, und
- wenigstens ein dezentrales Modul (6,8) zum Anschließen von Endgeräten aufweist,
wobei das zentrale Modul (4) und das wenigstens eine dezentrale Modul (6,8) in separaten Gehäusen (16, 18, 20; 36) aufgenommen sind und durch Datenübertragungsmittel in Datenübertragungsverbindung miteinander bringbar sind,
**dadurch gekennzeichnet,**
**daß** die Stromversorgungseinheit (10), die Datenverarbeitungseinheit (12) und die Schnittstelleneinheit (14) jeweils als getrennt voneinander transportable Module ausgebildet sind und **daß** die Stromversorgungseinheit (10), die Datenverarbeitungseinheit (12) und die Schnittstelleneinheit (14) jeweils in einem separaten Gehäuse (16, 18, 20) aufgenommen sind.

2. Kommunikationszentrale nach Anspruch 1, **gekennzeichnet durch** Verbindungsmittel zur Verbindung der Gehäuse (16, 18, 20) der Stromversorgungseinheit (10), der Datenverarbeitungseinheit (12) und der Schnittstelleneinheit (14) miteinander.

3. Kommunikationszentrale nach Anspruch 1, **dadurch gekennzeichnet, daß** die Gehäuse (16, 18, 20; 36) feuchtigkeits- und/oder staubdicht ausgebildet sind.

4. Kommunikationszentrale nach Anspruch 1, **dadurch gekennzeichnet, daß** den Gehäusen (16, 18, 20; 36) jeweils eine Klimatisierungs- und/oder Heizeinrichtung zur Klimatisierung und/oder Beheizung des jeweiligen Gehäuseinneren zugeordnet ist.

5. Kommunikationszentrale nach Anspruch 1, **dadurch gekennzeichnet, daß** die Stromversorgungseinheit (10) einen Anschluß an ein externes Stromnetz aufweist und eine Stromversorgung der Datenverarbeitungseinheit (12) und der Schnittstelleneinheit (14) bildet.

6. Kommunikationszentrale nach Anspruch 5, **dadurch gekennzeichnet, daß** die Stromversorgungseinheit (10) eine unterbrechungsfreie Stromversorgung (USV) aufweist.

7. Kommunikationszentrale nach Anspruch 1, **dadurch gekennzeichnet, daß** das wenigstens eine dezentrale Modul (6, 8) eine Stromversorgungseinrichtung aufweist.

8. Kommunikationszentrale nach Anspruch 7, **dadurch gekennzeichnet, daß** das wenigstens eine dezentrale Modul (6, 8) eine unterbrechungsfreie Stromversorgung (USV) aufweist.

9. Kommunikationszentrale nach Anspruch 1, **dadurch gekennzeichnet, daß** die Schnittstelleneinheit (14)
- wenigstens eine Schnittstelle (30) zum Verbinden der Kommunikationszentrale (2) mit einem Kommunikationsnetz und
- wenigstens eine Schnittstelle (32) zum Anschluß des wenigstens einen dezentralen Modules (6, 8) aufweist.

10. Kommunikationszentrale nach Anspruch 1, **dadurch gekennzeichnet, daß** die Schnittstelleneinheit (14) wenigstens eine aktive Netzwerkkomponente, insbesondere einen Router, aufweist.

11. Kommunikationszentrale nach Anspruch 1, **dadurch gekennzeichnet, daß** das oder jedes dezentrale Modul (6,8) eine Mehrzahl von Schnittstellen (34) zum Anschluß von Endgeräten, insbesondere Telekommunikations- und/oder Datenverarbeitungsendgeräten, aufweist.

12. Kommunikationszentrale nach Anspruch 1, **dadurch gekennzeichnet, daß** die Module der Kommunikationszentrale (2) miteinander und/oder mit einem Kommunikationsnetz leitungsgebunden, insbesondere über Lichtwellenleiter, verbindbar sind.

13. Kommunikationszentrale nach Anspruch 1, **dadurch gekennzeichnet, daß** die Module der Kommunikationszentrale (2) miteinander und/oder mit einem Kommunikationsnetz leitungsungebunden, insbesondere über Funk, verbindbar sind.

14. Kommunikationszentrale nach Anspruch 1, **dadurch gekennzeichnet, daß** Datenübertragungsverbindungen zwischen den Modulen der Kommunikationszentrale (2) untereinander und/oder zwischen der Kommunikationszentrale (2) und einem Kommunikationsnetz redundant ausgebildet sind.

15. Kommunikationszentrale nach Anspruch 1, **dadurch gekennzeichnet, daß** das wenigstens eine dezentrale Modul (6, 8) wenigstens eine aktive Netzwerkkomponente, insbesondere einen Switch, aufweist.

## Claims

1. Communication centre for mediating voice and/or data services,
which consists of separately transportable modules and comprises
- at least one central module (4) which comprises at least a power supply unit (10), a data processing unit (12) and an interface unit (14), and
- at least one decentral module (6, 8) for connecting terminal devices,
wherein the central module (4) and the at least one decentral module (6, 8) are accommodated in separate housings (16, 18, 20; 36) and can be connected to one another for data transmission by data transmission means,
**characterised in that**
the power supply unit (10), the data processing unit (12) and the interface unit (14) are in each case designed as separately transportable modules, and
the power supply unit (10), the data processing unit (12) and the interface unit (14) are in each case accommodated in a separate housing (16, 18, 20).

2. Communication centre according to Claim 1, **characterised by** connection means for connecting the housings (16, 18, 20) of the power supply unit (10), the data processing unit (12) and the interface unit (14) to one another.

3. Communication centre according to Claim 1, **characterised in that** the housings (16, 18, 20; 36) are designed to be impermeable to moisture and/or dust.

4. Communication centre according to Claim 1, **characterised in that** the housings (16, 18, 20; 36) are in each case assigned an air conditioning and/or heating device for air conditioning and/or heating the interior of the respective housing.

5. Communication centre according to Claim 1, **characterised in that** the power supply unit (10) has a connection to an external power network and forms a power supply for the data processing unit (12) and the interface unit (14).

6. Communication centre according to Claim 5, **characterised in that** the power supply unit (10) comprises an uninterruptible power supply (UPS).

7. Communication centre according to Claim 1, **characterised in that** the at least one decentral module (6, 8) comprises a power supply device.

8. Communication centre according to Claim 7, **characterised in that** the at least one decentral module (6, 8) comprises an uninterruptible power supply (UPS).

9. Communication centre according to Claim 1, **characterised in that** the interface unit (14) comprises
- at least one interface (30) for connecting the communication centre (2) to a communication network, and
- at least one interface (32) for connecting the at least one decentral module (6, 8).

10. Communication centre according to Claim 1, **characterised in that** the interface unit (14) comprises at least one active network component, in particular a router.

11. Communication centre according to Claim 1, **characterised in that** the or each decentral module (6, 8) comprises a plurality of interfaces (34) for connecting terminal devices, in particular telecommunications and/or data processing devices.

12. Communication centre according to Claim 1, **characterised in that** the modules of the communication centre (2) can be connected to one another and/or to a communication network in a wired manner, in particular via optical fibres.

13. Communication centre according to Claim 1, **characterised in that** the modules of the communication centre (2) can be connected to one another and/or to a communication network in a wireless manner, in particular via radio.

14. Communication centre according to Claim 1, **characterised in that** data transmission connections between the various modules of the communication centre (1) and/or between the communication centre (2) and a communication network are designed in a redundant manner.

15. Communication centre according to Claim 1, **characterised in that** the at least one decentral module (6, 8) comprises at least one active network component, in particular a switch.

## Revendications

1. Centre de communication destiné à transmettre des services linguistiques et/ou des services de données, qui se compose de modules transportables séparés les uns des autres et
- d'au moins un module central (4), qui comporte au moins une unité d'alimentation électrique (10), une unité de traitement des données (12) et une unité d'interface (14), et
- comporte au moins un module décentralisé (6, 8) destiné à raccorder des terminaux,
moyennant quoi le module central (4) et au moins un des modules décentralisés (6, 8) sont introduits dans des logements séparés (16, 18, 20 ; 36) et peuvent être placés l'un avec l'autre dans une liaison de transmission de données par un moyen de transmission de données,
**caractérisé en ce que** l'unité d'alimentation électrique (10), l'unité de traitement des données (12) et l'unité d'interface (14) sont conçues respectivement comme modules transportables séparés les uns des autres
et **en ce que** l'unité d'alimentation électrique (10), l'unité de traitement des données (12) et l'unité d'interface (14) sont introduites respectivement dans un logement séparé (16, 18, 20).

2. Centre de communication selon la revendication 1, **caractérisé par** un moyen de liaison destiné à relier les uns aux autres les logements (16, 18, 20) de l'unité d'alimentation électrique (10), de l'unité de traitement des données (12) et de l'unité d'interface (14).

3. Centre de communication selon la revendication 1, **caractérisé en ce que** les logements (16, 18, 20 ; 36) sont conçus pour être étanches à l'humidité et/ou aux poussières.

4. Centre de communication selon la revendication 1, **caractérisé en ce que** respectivement un dispositif de climatisation et/ou de chauffage est affecté aux logements (16, 18, 20 ; 36) pour climatiser et/ou chauffer l'intérieur des logements respectifs.

5. Centre de communication selon la revendication 1, **caractérisé en ce que** l'unité d'alimentation électrique (10) comporte un branchement à un réseau d'alimentation externe et forme une alimentation électrique de l'unité de traitement des données (12) et de l'unité d'interface (14).

6. Centre de communication selon la revendication 5, **caractérisé en ce que** l'unité d'alimentation électrique (10) comporte un onduleur (USV).

7. Centre de communication selon la revendication 1, **caractérisé en ce qu'**un des modules décentralisés (6, 8) au moins comporte un dispositif d'alimentation électrique.

8. Centre de communication selon la revendication 7, **caractérisé en ce qu'**un des modules décentralisés (6, 8) au moins comporte un onduleur (USV).

9. Centre de communication selon la revendication 1, **caractérisé en ce que** l'unité d'interface (14)
- comporte au moins une interface (30) destinée à relier le centre de communication (2) à un réseau de communication et
- comporte au moins une interface (32) destinée à raccorder un au moins des modules décentralisés (6, 8).

10. Centre de communication selon la revendication 1, **caractérisé en ce que** l'unité d'interface (14) comporte au moins un composant réseau actif, plus particulièrement un routeur.

11. Centre de communication selon la revendication 1, **caractérisé en ce que** le module centralisé ou chacun des modules centralisés (6, 8) comporte une pluralité d'interfaces (34) pour raccorder des terminaux, plus particulièrement des terminaux de télécommunication et/ou de traitement des données.

12. Centre de communication selon la revendication 1, **caractérisé en ce que** les modules du centre de communication (2) peuvent être raccordés les uns aux autres et/ou à un réseau de communication de façon guidée, plus particulièrement par un câble à fibres optiques.

13. Centre de communication selon la revendication 1, **caractérisé en ce que** les modules du centre de communication (2) peuvent être raccordés les uns aux autres et/ou à un réseau de communication de façon guidée, plus particulièrement par radio.

14. Centre de communication selon la revendication 1, **caractérisé en ce que** les liaisons de transmission de données entre les modules du centre de communication (2) sont conçues de façon redondante les unes sous les autres et/ou entre le centre de communication (2) et un réseau de communication.

15. Centre de communication selon la revendication 1, **caractérisé en ce qu'**un au moins des modules décentralisés (6, 8) comporte au moins un composant réseau actif, plus particulièrement un commutateur.
